# EUROPÄISCHE PATENTSCHRIFT

(11) **EP 2 146 412 B1**
(45) Veröffentlichungstag und Bekanntmachung des Hinweises auf die Patenterteilung: **17.06.2015**
(21) Anmeldenummer: 09165273.5
(22) Anmeldetag: 13.07.2009
(51) Int. Cl.: H02G 3/04, B29C 45/00, B29C 45/14

(54) **Schrumpfschlauch**
Shrinkable tubing
Gaine rétractable

(30) Priorität: 15.07.2008 DE 102008002945
(43) Veröffentlichungstag der Anmeldung: 20.01.2010
(73) Patentinhaber: Kumatec Sondermaschinenbau & Kunststoffverarbeitung GmbH, 96524 Neuhaus-Schierschnitz (DE)
(72) Erfinder: Löffler, Joachim, Dr., 96524 Neuhaus-Schierschnitz (DE)
(74) Vertreter: Pröll, Jürgen

(56) Entgegenhaltungen:
- DE-A1- 2 411 610
- DE-A1- 3 113 599
- GB-A- 2 375 156
- US-A- 3 493 458
- US-B1- 6 170 219

## Beschreibung

Die Erfindung betrifft einen Schrumpfschlauch als Schutzvorrichtung für Kabel, Kabelbäume oder längliche Gegenstände mit den im Oberbegriff des Anspruchs 1 angegebenen Merkmalen, sowie ein Verfahren zur Herstellung eines solchen Schrumpfschlauches und ein Werkzeug für die Herstellung.

Ein Schrumpfschlauch der gattungsgemäßen Art ist aus der DE 40 32 376 A1 bekannt. Der Schrumpfschlauch ist in Längsrichtung geschlitzt. Die hierdurch gebildeten Längskanten sind unter Ausbildung eines geschlossenen Profils miteinander verbindbar. Des Weiteren ist zur Erzielung einer Verbindung und Isolierung längerer, bereits verdrahteter Kabelabschnitte vorgesehen, dass an dem Schlauch beim Extrudieren die Längsprofile so angeformt sind, dass das nach außen vorstehende Längsprofil nach dem Trennen des Schlauches in das korrespondierende nach innen vorstehende Profil eingedrückt werden kann. Dies erfolgt nach dem radialen Recken des Schlauches, bevor durch Wärmeeinwirkung der Schlauch auf das Kabel aufgeschrumpft wird.

Aus der GB 2 123 223 A ist ein Schrumpfschlauch aus einer Folie bekannt, bei dem an den Längskanten ineinandergreifende haken- und bandförmige Elemente befestigt sind, die sich über die Gesamtlänge des Schrumpfschlauches erstrecken und ineinander hakbar sind. Durch die bandförmigen Haken, die mittels Haftstreifen an den Schrumpfschlauch angeklebt oder angeschweißt sind, ist eine Ummantelung einer Kabelanordnung nur dann möglich, wenn keine Innenspannung gegeben ist. Das Ineinanderhaken ist bedingt durch die Bandlänge relativ schwierig durchzuführen.

Aus der WO 97/49539 ist ein Schrumpfschlauch aus einer Schrumpffolie bekannt, an der Flächenreißverschlusselemente befestigt sind, die beim Umlegen eines zu schützenden Kabels zur Verbindung ineinander drückbar sind. Die Folienabschnitte liegen dabei übereinander.

Aus der DE 69 311 304 T2 ist eine Umwickelgewebehülse aus verschachtelten bzw. vernetzten Fasermaterialien bekannt, die für den Schutz von Kabeln, Schläuchen und anderen langgestreckten Gegenständen verwendet werden kann. Um den Geflechtschlauch an einem Kabel, Kabelbaum oder anderen langgestreckten Gegenständen zu befestigen, sind an diesen im Überlappungsbereich auf der einen Seite außenseitig ein erster Flächenreißverschlussstreifen und entlanglaufend an der zweiten Überlappungsseite innenseitig ein korrespondierender Flächenreißverschlussstreifen aufgebracht, die beide durch Aufeinanderdrücken eine Verbindung herstellen. Die Flächenreißverschlussstreifen sind aufgeklebt oder aufgeschweißt. Einen ähnlichen Aufbau zeigt die US 4,791,236.

Aus der WO 00/78574 A1 ist eine Schutzvorrichtung, insbesondere Abriebschutzvorrichtung, für in feuchter oder nasser Umgebung verlegte Kabelbäume bekannt, die eine mehrschichtige Ummantelung umfasst. Aus dieser Schrift ist es ferner bekannt, zum Schutz von Kabelbäumen vor Feuchtigkeit und/oder Nässe Schutzschläuche über solche zu ziehen, so beispielsweise ISO-Schläuche, Stülpschläuche oder Schrumpfschläuche. Als nachteilig ist dazu angegeben, dass das Anbringen der Schläuche aufwändig ist, da die Leiterdrähte in den Schläuchen eingefädelt werden müssen. Zudem muss die Montage der Schutzschläuche vor dem Anbringen der leiterdrahtendseitigen Kontaktelemente erfolgen. Bei gebündelten Leiterdrähten ist das Anbringen der endseitigen Kontaktelemente nur erschwert und aufwändig machbar. Beim Einsatz von Schrumpfschläuchen ist eine zusätzliche kostenintensive Wärmebehandlung erforderlich.

DE 31 13 599 A1 offenbart ein längsgeteiltes Muffenrohr mit Verschlusselementen entlang einer Teilungslinie des Muffenrohres. Die Verschlusselemente sind als Hakenelemente und als ösenförmige Rastelemente ausgebildet und mit Verstärkungen verbunden, welche fest mit bzw. in dem Muffenrohr entlang der Trennungslinie befestigt sind.

DE 2 411 610 A1 offenbart eine Hülle für zylindrische Gegenstände, wobei die Hülle aus einer Folie gebildet wird und wobei an den entgegengesetzten Rändern der Hülle miteinander in Eingriff zu bringende Reihen von Verschlusselementen angeordnet sind. Die Verschlusselemente werden über einen Schieber in Eingriff gebracht.

GB 2 375 156 A offenbart eine Rohrhülle mit einer Vielzahl von Verschlusselementen, die entlang eines Randes der Hülle angeordnet sind, wobei an dem anderen Rand der Hülle den Verschlusselementen entsprechende Aufnahmeöffnungen gebildet sind. Die Verschlusselemente können in die Aufnahmeöffnungen eingebracht werden, um eine wasserdichte Hülle zu erhalten.

US 3,493,458 A offenbart ein Paneel mit Einsetzen zur Steigerung der Steifigkeit des Paneels und zur Widerstandserhöhung gegen Verformungen.

US 6,170,219 B1 offenbart ein Verfahren zum Anbringen eines Abschlussteils an zwei aneinander anliegende Enden zweier Platten, wobei der durch die zwei Enden gebildete Flansch ungleichmäßig ausgebildet ist. Das Abschlussteil wird mittels eines Extrusionswerkzeugs entlang der Länge des Flanschs angebracht.

Schrumpfschläuche weisen im Gegensatz zu Geflechtsschläuchen den Vorteil auf, dass eine enge Bindung an das Kabel oder den Kabelstrang aus einer Vielzahl von Einzelkabeln gegeben ist und durch die Wärmebehandlung sich das Material so zusammenzieht, dass das Gebinde in der verlegten Struktur fest gehalten bleibt und einzelne Kabel innerhalb des Kabelbundes sich nicht verschieben können. Des Weiteren ist durch den Schrumpfschlauch gewährleistet, dass keine Feuchtigkeit eindringen kann. Der Schrumpfschlauch hat allerdings den bereits zuvor beschriebenen Nachteil, dass die einzelnen Kabel erst eingezogen werden müssen, bevor er unter Wärmebehandlung sich zusammenzieht und auf das Gebinde aufschrumpft.

Ausgehend vom angegebenen Stand der Technik liegt der Erfindung die Aufgabe zugrunde, einen Schrumpfschlauch derart zu gestalten, dass er auf einfache Art und Weise herstellbar ist und auf ein Kabel oder Kabelgebinde oder einen länglichen Gegenstand aufgebracht werden kann, wobei eine stoffschlüssige Verbindung mit den Hakenelementen hergestellt werden soll. Des Weiteren liegt die Aufgabe darin, ein geeignetes Fertigungsverfahren für die Herstellung eines solchen Schrumpfschlauches sowie ein Werkzeug hierfür anzugeben.

Die Erfindung löst die Aufgabe durch Ausgestaltung des Schrumpfschlauches entsprechend der im Anspruch 1 angegebenen technischen Lehre, sowie durch Anwendung des Verfahrens nach Anspruch 4 und durch Verwendung eines Werkzeuges nach Anspruch 5. Vorteilhafte Weiterbildungen der Erfindung sind in den Unteransprüchen 2 und 3 und eine vorteilhafte Weiterbildung des Werkzeugs in Anspruch 6 angegeben.

Ein Schrumpfschlauch nach der Erfindung zeichnet sich dadurch aus, dass das erste der ineinandergreifenden Elemente ein Hakenelement weiblichen Typs und das zweite der ineinandergreifenden Elemente ein Hakenelement männlichen Typs ist, dass erste Elemente gleichen Typs in Reihe an einer Längskante der Folie des Schrumpfschlauches in definierten Abständen mittels abgegrenzten Kunststoffanformungen stoffschlussbildend mindestens einseitig angespritzt sind und dass zweite, mit den ersten verbindbare Elemente an der zweiten Längskante der Folie korrespondierend mittels in definierten Abständen angeordneten abgegrenzten Kunststoffanformungen stoffschlussbildend mindestens einseitig angespritzt sind.

An den Längskanten der Folie eines aufgeschnittenen Schrumpfschlauches oder an den Seitenkanten einer streifenförmig zugeschnittenen, zu einem Schrumpfschlauch umbiegbaren Schrumpffolie werden die nach dem Umlegen der Folie um das Kabel oder den Kabelbaum ineinandergreifende Hakenelemente mit dem gleichen oder einem anderen, mit dem Folienkunststoff stofflich verbindbaren Kunststoffmaterial angespritzt. Das Hakenelement kann aus Kunststoff bestehend angeformt sein. In jedem Fall ist durch das Anspritzen der Hakenelemente an die Folie eine stoffschlüssige Verbindung gegeben und jedes Hakenpaar einzeln bedienbar. Zwischen den Hakenelementen besteht ein Abstand, beispielsweise 1 mm bis 2 mm, so dass die Folie in diesem Bereich flexibel ist und die Hakenelemente einzeln auf einfache Weise ineinander hängbar sind. Dies gilt für die Ausführungsform der Hakenele-mente aus Vollkunststoff.

Wenn die Seitenteile aus einem Gewebe, beispielsweise aus Kunststofffasern hergestellt, bestehen, ist beim Anspritzen der Kunststoffanformung an die Schrumpffolie der Vorteil gegeben, dass die Kunststoffmasse das Gewebe vollständig bindet. Ausreichende Festigkeit ist aber auch bei Verwendung von Folienstreifen als Seitenteile gegeben.

Die Erfindung kombiniert die Eigenschaften einer Schrumpffolie mit den Eigenschaften des Kunststoffes des angespritzten Hakenelementes in der Weise, dass der Schrumpfprozess durch Beaufschlagung mittels Wärme nicht beeinträchtigt wird, andererseits ein sicherer Halt gewährleistet ist und darüber hinaus im Bedarfsfall die Schrumpffolie von dem Gegenstand oder dem Kabelbaumabschnitt wieder entfernt werden kann.

Das erste Hakenelement weist einen Durchbruch und im Bereich des Durchbruchs eine untenseitige Abstufung auf und das zweite Hakenelement ist mit einer aus der Ebene des zweiten Hakenelements hervorstehenden Rastnase durch den Durchbruch des ersten Hakenelementes von unten einsetzbar und die untenseitige Abstufung ist der Höhe des zweiten Hakenelements angepasst.

Die Fixierung der Hakenelemente an der Schrumpffolie mittels angespritzter Kunststoffanformungen, die in Reihe und beabstandet zueinander angeordnet sind, gewährleistet in Längsrichtung des Schrumpfschlauches auch eine hohe Elastizität, so dass bogenförmige Verlegungen des Kabelbündels, das von der Schrumpffolie nach der Erfindung umgeben ist, möglich sind. Erst nach der Fixierung der Schrumpffolie über die Verbindungselemente an dem Kabelbündel wird die Schrumpffolie auf das Kabelbündel aufgeschrumpft.

Um eine leichtere Handhabung zu erreichen, kann an dem Hakenelement ein Griffteil angespritzt sein. Dieser kann in Längs- oder Querrichtung verlaufend vorgesehen sein, so dass mit zwei Fingern das Hakenelement auch einfach bedienbar ist. Auch kann das Hakenelement eine vorstehende Rastnase aufweisen, die die Kanten der Durchbrüche im zusammengehängten Zustand übergreift. Es versteht sich von selbst, dass die Positionierung stets komplementär vorzusehen ist und die entsprechenden Werkzeugkavitäten so gelegt sein müssen, dass die ineinandergreifenden Hakenelemente beim Benutzen der Folie miteinander verbindbar sind. Beim Anspritzen oder auch beim beidseitigen Umspritzen der Schrumpffolie ist es erforderlich, dass die Schrumpffolie in der Kavität positioniert gehalten wird. Zu diesem Zweck sind Stifte vorgesehen, die entweder die Folie beidseitig untergreifen, um eine Umspritzung zu ermöglichen, oder einseitig aufgreifen, während die Folie auf einem Boden des Werkzeugs aufliegt. Nach den Entformung sind die Löcher deutlich zu sehen, die auf die Stifte zurückgehen, so dass die stoffliche Bindungszone wie durchlöchert erscheint.

Durch die erfindungsgemäße Ausgestaltung ist es ebenfalls möglich, einen Schrumpfschlauch im längs geöffneten Zustand, wie bei den bekannten Geflechtsschläuchen, auf ein Kabelgebinde, ein Kabel oder auf einen Schlauch oder einen anderen länglichen Gegenstand durch Umlegen aufzubringen und an der Verbindungsstelle die Hakenelemente miteinander zu verbinden, um eine lösbare Verbindung herzustellen. Zusätzlich ist der Vorteil gegeben, dass beim Schrumpfungsprozess durch Aufblasen von heißer Luft oder anderem Wärmeeintrag der Schrumpfschlauch insgesamt sich zusammenzieht, aber auch die aus gleichem Kunststoff bestehenden Verbinder zumindest anschmelzen, so dass neben der hakenförmigen Verbindung oder Nut-/Kederverbindung zusätzlich eine Haftung durch Anschweißen bzw. Materialverbindungen entsteht. Wenn der Aufschrumpfprozess gesteuert durchlaufen wird, ist die durch die Anschmelzung gegebene Haftung zwar vorhanden, aber so eingestellt, dass sie durch erhöhte Krafteinwirkung wieder auflösbar ist, so dass auch nachträglich eine Umhüllung der erfindungsgemäßen Art wieder einfach geöffnet werden kann und diese an keine bestimmte Form gebunden ist. Grundsätzlich können für die Anformungen und die Folie unterschiedliche Kunststoffe verwendet werden, diese müssen sich allerdings miteinander verschmelzen lassen.

Ein Schrumpfschlauch ist bekanntermaßen ein Kunststoffschlauch, der sich unter Hitzeeinwirkung, meist durch Zuführung von Heißluft, stark zusammenzieht. Hierbei wird das vor dem Erhitzen in den Schlauch eingebrachte Produkt gegen seine Umgebung elektrisch isoliert und vor mechanischen Beschädigungen geschützt. Der Schrumpfbereich, also die maximale Größenänderung beim Schrumpfen, ist stark vom verwendeten Kunststoff abhängig. Schrumpfverhältnisse von 2:1 bis 6:1 sind üblich, höhere können ebenfalls realisiert werden. Um eine gute Abdichtung zu erreichen, sind viele Schrumpfschläuche innenseitig zusätzlich mit einem Heißkleber beschichtet. Zur Herstellung von Schrumpfschläuchen eignen sich Thermoplaste, nämlich Polyolefine, Polyvinylidenfluorid (PVDF), Fluorelastomere, Polyvinylchlorid (PVC), Polytetrafluorethen. Um ein schrumpfendes Material bei Wärmezufuhr zu erreichen, müssen die Kunststoffe bei der Herstellung im Extruder vernetzt werden. Durch die Vernetzung werden die Molekülketten untereinander durch Wasserstoffbrücken verbunden. Die Vernetzung kann entweder durch Silane oder durch einen Elektronenstrahl erfolgen. Das so behandelte Extrudat kann im warmen Zustand bei einer Temperatur, die bei ca. der Extrusionstemperatur liegt, aufgeweitet werden. Durch schlagartiges Abkühlen wird dem Material die Energie zur Rückorientierung entzogen und somit die aufgeweiteten Durchmesser erhalten. Erst durch Zuführung von Wärme kann sich der Schrumpfschlauch zurückorientieren. Da es sich beim Schrumpfschlauch um vernetzte Kunststoffe handelt, sind diese nicht als Regranulat zu verwenden. Ausnahmen bilden Schrumpfschläuche aus PVC, da PVC nicht vernetzt werden muss.

Die Eigenschaften des Kunststoffes bleiben also auch bei einem Schrumpfschlauch nach der Erfindung voll erhalten, wobei der angespritzte oder mit ausgeformte Verbindungsstreifen mit dem korrespondierenden Verbindungsstreifen auf einfache Weise zusammengefügt werden kann und durch die Einbringung von Heißluft auch einen Anschmelzprozess vollzieht, der auch bei anhaltendem Wärmeeintrag keine Auflösung der Verbindung zur Folge hat. Der Schlauch kann also ebenfalls vollwertig als Isolierschlauch gegen Feuchtigkeit und Wasser eingesetzt werden, was bei gewebten Schläuchen nicht der Fall ist. Aufgrund des verwendeten Materials und der Ausbildung des Schrumpfschlauches ist auch die Anbringung an größere Kabelbaumkonfektionierungen möglich. Zu diesem Zweck werden die Schrumpfschläuche in Teilbereiche unterteilt oder die Kabel einzeln durch geöffnete Schlitze herausgeführt. Eine automatische Kabelbaumkonfektionierung ist hiermit ebenfalls möglich.

Nach der Erfindung werden in Reihe Hakenelemente an den Randstreifen der Folie angespritzt, wobei an dem einen Randstreifen ein männliches und an dem anderen Randstreifen ein weibliches Hakenelement angebracht werden. Nach dem Umschlagen des Kabelbaums wird entweder das männliche in das weibliche Hakenelement eingerastet oder umgekehrt. Zu diesem Zweck kann das eine Hakenelement eine Rastzunge aufweisen, die in eine Rastausnehmung des zweiten Elementes einrastet oder durch dieses hindurchgreift und auf der Oberseite zur Anlage gelangt. Die beiden Hakenelemente sind dabei so aufeinander abgestimmt, dass keine wesentliche Verdickung gegenüber einem Element gegeben ist und auch ein erneutes Lösen grundsätzlich möglich ist, solange der Schrumpfprozess noch nicht vollzogen wurde.

Das Anspritzen kann im Extrusionsverfahren erfolgen, wobei die Folie bereits vorgefertigt ist und zum Zweck der Anspritzung der Streifen durch eine Matrize eines Extrusionswerkzeuges gezogen wird, wobei der Kunststoff, der von gleicher Art wie der der Schrumpffolie ist durch die Matrize auf die Folie aufgebracht wird und sich mit dem Randbereich der Schrumpffolie verbindet. Trennmittel bilden dabei unbelegte Zwischenräume. So ist es möglich, durchgehend Haken in definierten Abständen anzuformen und an dem anderen Randstreifen Gegenhaken, die ineinander greifen und den Schrumpfschlauch bilden. Auch das Recken der Folie kann sich auf die Verbindungsstreifen positiv auswirken. Wenn nämlich die Verbindung hergestellt ist und der Schrumpfprozess durch Einbringung von Wärme einsetzt, so kann durch die Hakenverbindung durch Aufschrumpfen oder Anschmelzen eine feste Verbindung entstehen, die nur mit hohem Kraftaufwand wieder auflösbar ist. Dies ist auch bei den Hakenelementen gegeben, die einzeln aufgespritzt sind. Bei Beaufschlagung mit Heißluft ist ohnehin ein Ausschluss der Erwärmung der Hakenelemente nicht möglich, so dass der damit verbundene Aufschrumpfungsprozess dazu führt, dass eine Anschmelzung gegeben ist und bei vorstehenden Überstandsstreifen der Folie unterhalb der Hakenelemente diese eine wasserdichte feste Verbindung eingehen.

Ein Verfahren zur Herstellung eines Schrumpfschlauches nach Anspruch 1 ist im Anspruch 5 angegeben, das durch folgende Verfahrensschritte gekennzeichnet ist:
In einem ersten Verfahrensschritt wird der Schrumpfschlauch aufgetrennt oder eine Schrumpffolie in Streifen zugeschnitten. In einem weiteren Verfahrensschritt werden die Randstreifen in jeweils mindestens eine Kavität in einem Kunststoffspritzwerkzeug eingelegt, das die Form des Hakenelementes wiedergibt. Mittels der in die Kavität eingreifenden Stifte wird die Schrumpffolie innerhalb der Kavität positioniert gehalten. Die Kavität wird mit einem flüssigen Kunststoff gleicher Art dem des Schrumpfschlauches oder der Schrumpffolie unter Druck verfüllt (abgespritzt), so dass eine hohe Bindungswirkung zur Folie durch Anschmelzen gegeben ist. Nach den gleichen Verfahrensschritten können weitere Hakenelemente in Reihe gleichzeitig oder nachfolgend angespritzt werden, wobei die korrespondierenden Hakenelemente so ausgebildet sind, dass sie rastend ineinander drückbar sind, wenn die Schrumpffolie um das Kabel oder den Kabelbaum gelegt ist.

Gemäß der angegebenen Verfahrenslehre werden die Hakenelemente, nämlich die männlichen und die weiblichen, als Einzelelemente entlang der Kante der Folie korrespondierend angebracht. In dem Werkzeug selbst können auch mehrere Kavitäten in Reihe vorgesehen sein, um die einzelnen Elemente gleichzeitig anspritzen zu können. Nach der Entnahme ist eine Verarbeitung unmittelbar möglich. Wird eine solche Kunststofffolie mit den Hakenelementen um einen Kabelbaum gelegt, werden die Hakenelemente ineinander verrastet und wird Heißluft eingebracht, so schrumpfen die Folie und zugleich auch die Hakenelemente bzw. kann dies dazu führen, dass die aneinanderstoßenden Seiten der Hakenelemente miteinander verkleben oder verschweißen, so dass eine gesicherte Verbindung einerseits und ein erhöhter Feuchtigkeitsschutz andererseits gegeben ist. Wird der Heißlufteintrag beim Schrumpfprozess gesteuert durchgeführt, so kann dies dazu führen, dass die Hakenverbindungen auch nachträglich durch erhöhte Kraftaufwendung wieder gelöst werden können, um beispielsweise den Schrumpfschlauch an einzelnen Stellen öffnen und Kabel hindurchziehen oder reißverschlussmäßig öffnen zu können. Es versteht sich von selbst, dass in solchen Fällen die in Ausnehmungen kantenübergreifenden Rastnasen oder Haken solche Flanken aufweisen müssen, dass eine Trennung in gewünschter Weise wieder möglich ist.

In einem ersten Verfahrensschritt wird grundsätzlich immer der Schrumpfschlauch aufgetrennt und/oder eine Schrumpffolie in Streifen zugeschnitten. In einem weiteren Verfahrensschritt ist vorgesehen, dass die Schrumpffolie durch eine Matrize eines Extrudierwerkzeuges mit den Randzonen durchgezogen wird, welches Werkzeug seitlich angeformte Hakenausbildungen zur Bildung eines Hakenstreifens aufweist. Im Extrusionsverfahren wird der Kunststoff zur Bildung der Hakenelemente auf den Randstreifen der Folie aufgespritzt, wobei mitlaufende Distanzteile zwischen zwei benachbarten Hakenelementen den Zwischenraum zur Folie hin freihalten.

Die seitlichen Ausbildungen können aber auch im Extruder an die Folie mit angeformt werden. Dies hat den Vorteil, dass beim Extrudieren der Folie, also vor dem Recken derselben, die Hakenelemente bereits vorhanden sind. Dabei können, wie eingangs schon beschrieben, die Hakenelemente auf der einen Seite untenseitig und auf der anderen Seite obenseitig angebracht werden, um die überlappende Verbindung sicherzustellen. Wenn die Hakenelemente nachträglich angebracht werden, ist die Folie mit ihren Randbereichen in eine Matrize eines Extrudierwerkzeuges ein- und durchzuziehen.

Das Werkzeug zur Herstellung eines Schrumpfschlauches mit an den Randzonen der Folie vorgesehenen Hakenelementen weist mindestens zwei gegenüberliegende Kavitäten auf, von denen die eine Kavität zur Bildung eines männlichen Hakenelementes und die gegenüberliegende Kavität zur Bildung eines korrespondierenden weiblichen Hakenelementes ausgebildet sind. Das Werkzeug weist im Bereich beider Kavitäten Zuführspalten auf, durch die ein Randstreifen in die Kavität einlegbar ist. In den Kavitäten sind untergreifende und auf den Folienstreifen aufgreifende Fixierstifte als Stifte zur Lagersicherung des Kunststoffstreifens während des Spritzens vorgesehen. Auch können eine Reihe von Kavitäten in einem solchen Werkzeug vorgesehen sein, so dass beispielsweise fünf oder zehn Hakenelemente gleichzeitig anformbar sind.

Die Erfindung wird nachfolgend anhand der in den Zeichnungen dargestellten Ausführungsbeispiele ergänzend erläutert:

In den Zeichnungen zeigen:
- Fig. 1: in schematischer Darstellung einen Kabelbaum mit einem diesen umgebenen Schrumpfschlauch, der erfindungsgemäß ausgebildet ist,
- Fig. 2: eine Folie eines Schrumpfschlauches mit schematisch dargestellten Randzonen,
- Fig. 3: ein weibliches Hakenelement als Verbindungselement für die Folie,
- Fig. 4: ein männliches Hakenelement,
- Fig. 5: eine Schrumpffolie mit seitlich angebrachten männlichen und weiblichen Hakenelementen,
- Fig. 6: einen in perspektivischer Darstellung wiedergegebenen Abschnitt eines Schrumpfschlauches mit daran angespritztem Reißverschluss in geschlossenem Zustand,
- Fig. 7: einen Vergrößerungsausschnitt aus Figur 6,
- Fig. 8: ein Beispiel eines Abschnittes eines Schrumpfschlauches nach der Erfindung mit angespritzten Metallhaken und Ösen in der Draufsicht und
- Fig. 9: einen Vergrößerungsausschnitt aus Figur 8 in der Rückansicht.

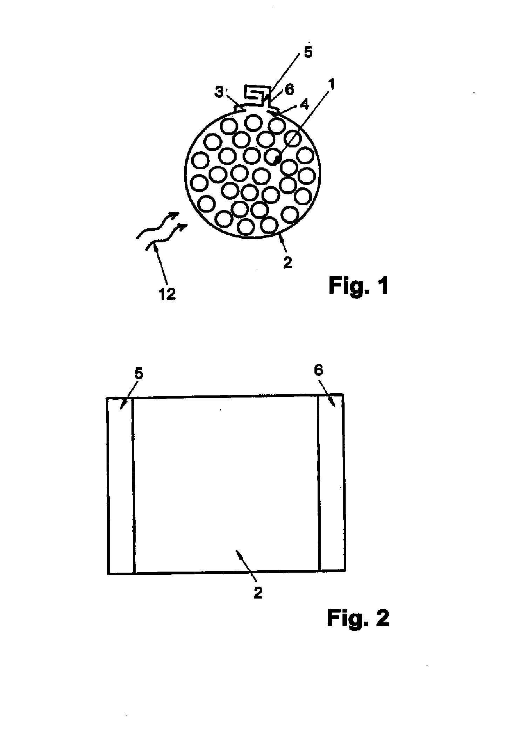

Das Ausführungsbeispiel in Fig. 1 zeigt ein Kabelbündel eines Kabelbaumes 1, das von einer Schrumpffolie 2 eines Schrumpfschlauches umgeben ist. Diese Schrumpffolie 2 weist an den Längskanten 3, 4 Hakenelemente 5, 6 auf. Die Schrumpffolie ist also um das Kabelbündel 1 herumgelegt und deren Überlappungsenden obenseitig mit dem stilistisch dargestellten Hakenelementen 5, 6 miteinander verbunden. Der ausgebreitete Zustand der Folie 2 ist in Fig. 2 dargestellt. Die Hakenelemente 5, 6 sind dabei seitlich als Zonen eingetragen.

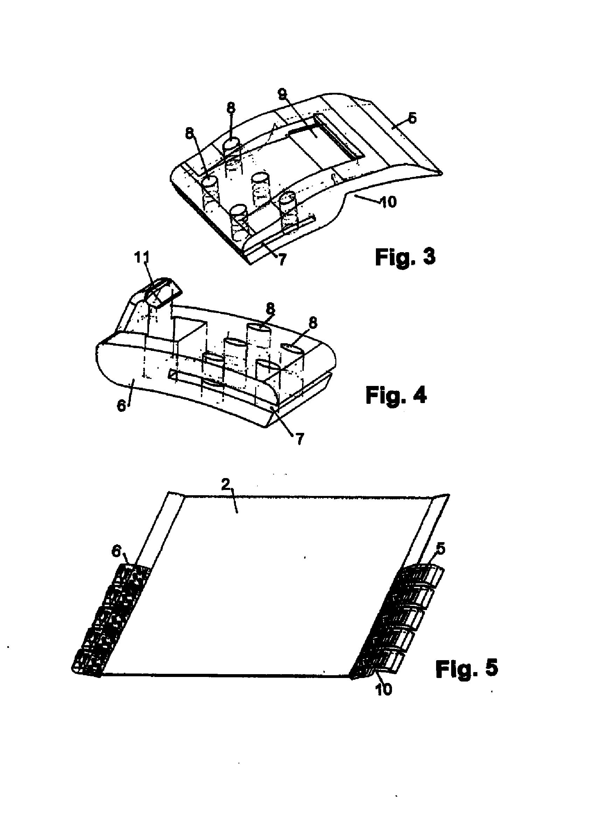

In Fig. 3 ist ein Hakenelement weiblichen Typs dargestellt, das an den Randzonen der Folie 2 angespritzt ist. Dieses Hakenelement 5 wird in einer Kavität eines Werkzeuges bei gleichzeitigem Einspritzen der Folie, die den Schlitz 7 bildet, hergestellt. Die Kavität im Werkzeug prägt die Form. In der Kavität stehen ferner von unten nach oben und von oben nach unten Stifte als Klemmelemente vor, die die eingezeichneten Löcher 8 beim Herausziehen hinterlassen. Die Stifte halten während des Spritzvorganges die Schrumpffolie 2 in dem Werkzeug fest, so dass die Schrumpffolie 2 allseits über die gesamte Tiefe von Kunststoff gleicher Art umgeben ist, aus der das Hakenelement gefertigt ist. Das Hakenelement weist einen Durchbruch 9 auf und eine untenseitige Abstufung 10. In die Abstufung 10 kann das männliche Hakenelement 6 gemäß Fig. 4 eingesetzt werden. Zu diesem Zweck steht eine Rastnase 11 aus der Ebene hervor, diese wird in den Durchbruch 9 des Hakenelementes 5 von unten eingesetzt. Die Abstufung 10 des Hakenelements entspricht der Höhe des Hakenelementes 6, so dass sie eine Einheit bilden. Das Hakenelement 6 ist in gleicher Weise an eine Folie angespritzt, die in einer zweiten Kavität eingesetzt ist. Auch hier sind wieder Löcher 8 eingezeichnet, die markieren, dass zuvor Stifte zur Klemmung der Schrumpffolie in die Kavität eingesetzt waren.

Fig. 5 zeigt nun eine Anordnung von mehreren Halteelementen 5, 6 auf den Randstreifen der Schrumpffolie 2. Wenn die Schrumpffolie um das Kabelbündel 1 nach Fig. 1 umgelegt wird, ist ersichtlich, dass die Unterseite der weiblichen Hakenelemente 5 sich nach oben kehren und die männlichen Hakenelemente 6 in die stufenförmigen Ausnehmungen 10 hineingedrückt werden können, wobei die angeformten Rastnasen 11 die Kanten der Durchbrüche 9 übergreifen. Wenn nun durch Wärmeeintrag 12, symbolisch in Fig. 1 dargestellt, der Schrumpfprozess durchgeführt wird und die Schrumpffolie auf das Kabelbündel 1 aufschrumpft, so kann der Heißluftstrom auch bewirken, dass die Rastnasen 11 an den Oberseiten des Hakenelements 5 anschweißen.

Des Weiteren kann auch die Oberseite des in Fig. 4 dargestellten Hakenelementes 6 an der Unterseite der Stufe 10 des Hakenelementes 5 angeschweißt werden. Es entsteht also eine feste Verbindung. Wird dieser Schweißprozess nicht vollständig durchgeführt oder nur zeitlich begrenzt, so ist ersichtlich, dass selbst bei Anhaftung der Rastnase 11 an der Oberseite des Hakenelementes 5 eine Trennung wieder möglich ist, obgleich die Schrumpffolie selbst auf das Gebinde aufgeschrumpft ist. Dies hat den Vorteil, dass dann, wenn einzelne Kabel herausgeführt werden sollen, auf einfache Weise eine Auftrennung der Verbindung möglich ist.

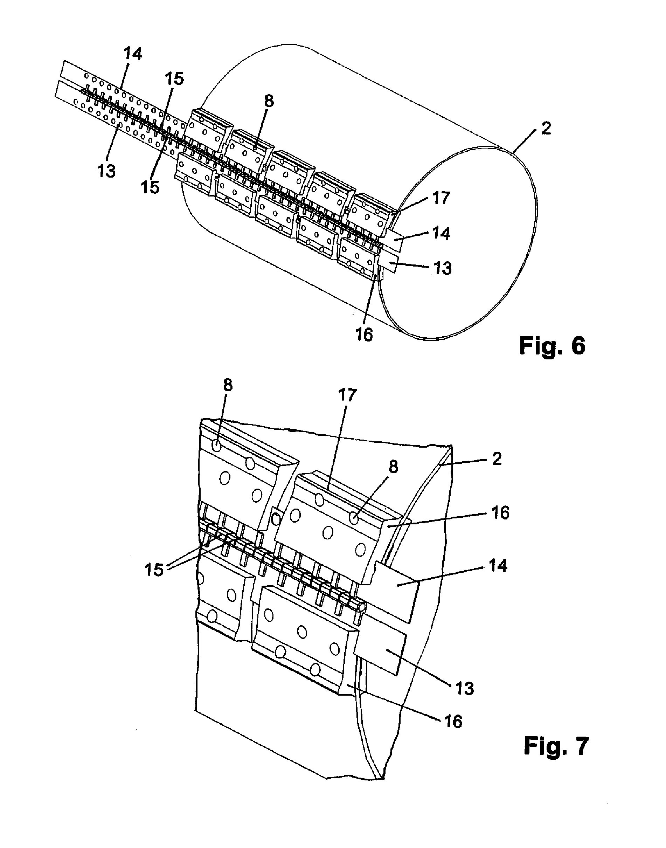

In Figur 6 ist die Schrumpffolie 2 über die Verbindungselemente zu einem schlauchförmigen Körper geformt dargestellt. Als Verbindungselement wird ein Reißverschluss verwendet, der zwei Seitenteile 13, 14 mit Folienrandstreifen aufweist. Der Folienrandstreifen ist gelocht, um das Durchfließen der Kunststoffmasse beim Anspritzen an die Schrumpffolie 2 zu ermöglichen. Die beiden Seitenteile weisen ferner Krampen 15 auf, die im zusammengefügten Zustand gezeichnet sind und über einen nicht dargestellten Schieber in bekannter Weise zusammengefügt und bei entgegengesetzter Bewegung des Schiebers voneinander weg bewegt werden, so dass die Reißverschlussverbindung wieder aufgelöst wird.

Die Seitenteile 13, 14 des Reißverschlusses sind mittels der Kunststoffanformungen 16 an der Schrumpffolie 2 angespritzt. Die Kunststoffanformungen 16 weisen außenseitig Erhöhungen 17 auf, so dass sie mit zwei Fingern aufeinanderzu- gedrückt werden können, wenn der Reißverschluss geschlossen werden soll. Die Anspritzung erfolgt oben- und untenseitig an der Schrumpffolie 2, wodurch eine in sich formstabile Kunststoffanformung 16 gegeben ist. Der Zwischenraum zwischen den beiden benachbarten Kunststoffanformungen 16 stellt sicher, dass die Schrumpffolie in Längsrichtung flexibel ist, um einen damit umgebenen Kabelbaum oder ein Kabelbündel auch in einem Bogen verlegen zu können. Weiterhin ist aus den Figuren 6 und 7 ersichtlich, dass in der Kunststoffanformung 16 Löcher 8 enthalten sind, die durch die stiftförmigen Niederhalter in der Kavität des Werkzeugs beim Entformen hervorgerufen werden. Diese stiftförmigen Niederhalter fixieren mindestens die Schrumpffolie in der Kavität. Weitere Stifte oder dieselben Stifte können aber auch zur Fixierung der Seitenteile 13, 14 des Reißverschlusses herangezogen werden.

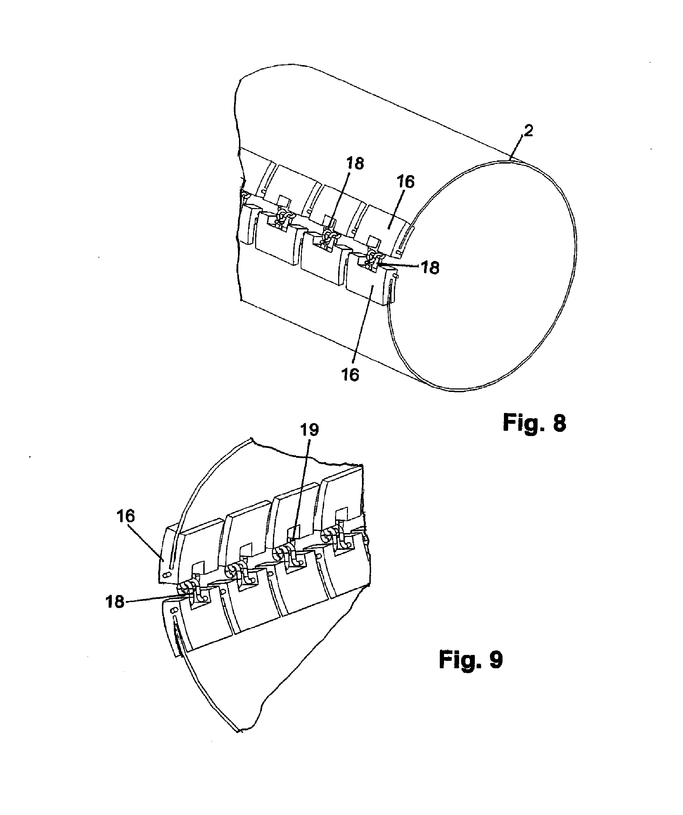

In den Figuren 8 und 9 ist ein Beispiel angegeben, bei dem die Verbindungselemente Haken 18 und Ösen 19 aus Metall aufweisen, die als Einlegeteile in die Kavität zum Anspritzen eingelegt werden, wenn die Kunststoffanformung 16, die hier vereinfacht dargestellt ist, an die Schrumpffolie 2 angespritzt wird. Die in Figur 9 dargestellte Rückansicht zeigt, dass die Haken 18 von unten her in die Ösen 19 eingehakt sind und dass die Schrumpffolie 2 beidseitig in den Kunststoffanformungen 16 einge bunden ist. In der Kavität sind Schieber eingesetzt, um die Freilegung der Ösenteile und Hakenteile zu gewährleisten, damit die gezeichnete Verbindung erzielbar ist.

### Bezugszeichenliste

- 1: Kabelbaum
- 2: Schrumpffolie
- 3: Längskante
- 4: Längskante
- 5: Element
- 6: Element
- 7: Spalt
- 8: Loch
- 9: Durchbruch
- 10: streifenförmige Ausnehmung
- 11: Rastnase
- 12: Wärmeeintrag
- 13: Seitenstreifen
- 14: Seitenstreifen
- 15: Krampen
- 16: Kunststoffanformungen
- 17: Erhöhung
- 18: Metallhaken
- 19: Metallöse

## Patentansprüche

1. Schrumpfschlauch als Schutzvorrichtung für Kabel und Kabelbäume oder längliche Gegenstände aus einer Schrumpffolie, wobei an den Längskanten (3, 4) der Schrumpffolie (2) eines aufgeschnittenen Schrumpfschlauches oder an den Seitenkanten einer streifenförmig zugeschnittenen, zu einem Schrumpfschlauch umbiegbaren Schrumpffolie Elemente (5, 6) angebracht sind, die nach dem Umlegen der Schrumpffolie (2) um das Kabel, den Kabelbaum (1) oder den Gegenstand ineinandergreifen, **wobei**,
- das erste der ineinandergreifenden Elemente (5) ein Hakenelement weiblichen Typs und das zweite der ineinandergreifenden Elemente (6) ein Hakenelement männlichen Typs ist , **dadurch gekennzeichnet,**
- **dass** erste Elemente (5) gleichen Typs in Reihe an einer Längskante (3, 4) der Folie des Schrumpfschlauches in definierten Abständen mittels abgegrenzten Kunststoffanformungen (16) stoffschlussbildend mindestens einseitig angespritzt sind,
- **dass** zweite, mit den ersten (5) verbindbare Elemente (6) an der zweiten Längskante der Folie korrespondierend mittels in definierten Abständen angeordneten abgegrenzten Kunststoffanformungen (16) stoffschlussbildend mindestens einseitig angespritzt sind, und
- **dass** das erste Element (5) einen Durchbruch (9) und im Bereich des Durchbruches (9) eine untenseitige Abstufung (10) und das zweite Element (6) eine aus der Ebene des zweiten Elementes (6) vorstehende Rastnase (11) aufweist, die durch den Durchbruch (9) des ersten Elementes (5) von unten einsetzbar ist, wobei die untenseitige Abstufung (10) der Höhe des zweiten Elementes (6) entspricht, und dass beide Elemente (5, 6) aus Kunststoff bestehen und Bestandteil der Kunststoffanformung (16) sind.

2. Schrumpfschlauch nach Anspruch 1, **dadurch gekennzeichnet, dass** die Kunststoffanformungen (16) die Folie (2) im Randbereich einbetten.

3. Schrumpfschlauch nach Anspruch 1, **dadurch gekennzeichnet, dass** die Kunststoffanformungen (16) Löcher (8) von Stiften aufweisen, die während des Umspritzens der Kunststofffolie (2) in der Kavität auf diese aufgreifen.

4. Verfahren zur Herstellung eines Schrumpfschlauches nach Anspruch 1, **dadurch gekennzeichnet,**
- **dass** in einem ersten Verfahrensschritt der Schrumpfschlauch aufgetrennt oder eine Schrumpffolie (2) in Streifen zugeschnitten wird,
- **dass** die Randstreifen des Schrumpfschlauches oder der Schrumpffolie (2) in mindestens eine Kavität in einem Kunststoffspritzwerkzeug, das die Form der ineinandergreifenden Elemente (5, 6) wiedergibt, eingelegt werden,
- **dass** Stifte in dem Kunststoffspritzwerkzeug die Schrumpffolie positionieren,
- **dass** die Kavität mit einem flüssigen Kunststoff gleicher Art dem des Schrumpfschlauches oder der Schrumpffolie (2) oder mit einer damit verbindbaren Kunststoffart zur stofflichen Verbindung mit der Folie verfüllt wird und
- **dass** nach gleichen Verfahrensschritten weitere ineinandergreifende Elemente (5, 6) in Reihe gleichzeitig oder nachfolgend angespritzt werden, wobei die korrespondierenden ineinandergreifenden Elemente (5, 6) so ausgebildet sind, dass sie rastend ineinander drückbar sind, wenn die Schrumpffolie (2) um das Kabel oder den Kabelbaum (1) oder den länglichen Gegenstand gelegt ist.

5. Werkzeug zur Herstellung eines Schrumpfschlauches nach Anspruch 1, **dadurch gekennzeichnet,**
- **dass** das Werkzeug mindestens zwei gegenüberliegende Kavitäten aufweist, von denen die eine Kavität zur Bildung der ersten Elemente (5) und die gegenüberliegende Kavität zur Bildung des zweiten korrespondierenden Elementes (6) dient,
- **dass** das Werkzeug im Bereich beider Kavitäten Zuführspalten aufweist, durch die Randstreifen der Folie des Schrumpfschlauchs in die Kavitäten einlegbar sind, und
- **dass** in den Kavitäten untergreifende und auf die Randstreifen aufgreifende Fixierstifte zur Lagesicherung während des Spritzens vorgesehen sind.

6. Werkzeug zur Herstellung eines Schrumpfschlauches nach Anspruch 5, **dadurch gekennzeichnet, dass** in Reihe mehrere Kavitäten im Werkzeug vorgesehen sind.

## Claims

1. Shrinkable tubing of a shrinkable foil as a protective device for cables and cable looms or elongate articles, wherein mounted at the longitudinal edges (3, 4) of the shrinkable film (2) of a cut-open shrinkable tubing or at the lateral edges of a shrinkable foil, which is cut to be strip-shaped and which can be bent around to form a shrinkable tubing, are elements (5, 6) which interengage after laying of the shrinkable foil (2) around the cable, cable loom (1) or the article, wherein:
- the first one of the interengaging elements (5) is a hook element of female type and the second one of the interengaging elements (6) is a hook element of the male type, **characterised in that**
- first elements (5) of the same type are injection-moulded at at least one side to form a material bond in a row at one longitudinal edge (3, 4) of the foil of the shrinkable tubing at defined spacings by means of delimited plastics material shaped portions (16),
- second elements (6) connectible with the first elements (5) are injection-moulded at at least one side to form a material bond at the second longitudinal edge of the foil correspondingly by means of delimited plastics material shaped portions (16) arranged at defined spacings and
- the first element (5) has a passage (9) and in the region of the passage (9) a step (10) at the lower side and the second element (6) has a detent lug (11), which protrudes out of the plane of the second element (6) and which is insertable through the passage (9) of the first element (5) from below, wherein the step (10) at the lower side corresponds with the height of the second element (6) and the two elements (5, 6) consist of plastics material and are a component of the plastics material shaped portion (16).

2. Shrinkable tubing according to claim 1, **characterised in that** the plastics material shaped portions (16) embed the foil (2) in the edge region.

3. Shrinkable tubing according to claim 1, **characterised in that** the plastics material shaped portions (16) have holes (8) of pins which during injection-moulding around of the plastics material foil (2) in the cavity engage on the foil.

4. Method of producing a shrinkable tubing according to claim 1, **characterised in that**
- in a first method step the shrinkable tubing is cut open or a shrinkable foil (2) is cut into strips,
- the edge strips of the shrinkable tubing or the shrinkable foil (2) are placed in at least one cavity in a plastics material injection-moulding tool which reproduces the shape of the interengaging elements (5, 6),
- pins position the shrinkable foil in the plastics material injection-moulding tool,
- the cavity is filled with a liquid plastics material of the same kind as that of the shrinkable tubing or the shrinkable foil (2) or with a kind of plastics material, which is connectible therewith, for connection by material bond with the foil and
- after the same method steps further interengaging elements (5, 6) are injection-moulded in a row simultaneously or in succession, wherein the co-operating interengaging elements (5, 6) are so constructed that they can be pressed for detenting in one another when the shrinkable foil (2) is laid around the cable or the cable loom (1) or the elongate article.

5. Tool for producing a shrinkable tubing according to claim 1, **characterised in that**
- the tool has at least two opposite cavities, of which one cavity serves for formation of the first element (5) and the opposite cavity for formation of the second, co-operating element (6),
- the tool has in the region of the two cavities feed gaps through which edge strips of the foil of the shrinkable tubing are insertable into the cavities and
- fixing pins, which are under-engaging and which engage on the edge strips, for positional securing during the injection-moulding are provided in the cavities.

6. Tool for producing a shrinkable tubing according to claim 5, **characterised in that** several cavities are provided in a row in the tool.

## Revendications

1. Gaine rétractable utilisée comme dispositif de protection obtenu à partir d'un film rétractable pour des câbles et des faisceaux de câbles ou des objets oblongs, des éléments (5, 6) étant appliqués sur les bords longitudinaux (3, 4) du film rétractable (2) d'une gaine rétractable coupée ou sur les bords latéraux d'un film rétractable pliable découpé en bandes pour former une gaine, lesquels s'enclenchent l'un dans l'autre après pose du film rétractable (2) autour du câble, du faisceau de câbles (1) ou de l'objet,
- le premier (5) des éléments s'enclenchant l'un dans l'autre étant un élément en crochet de type femelle et le deuxième (6) des éléments s'enclenchant l'un dans l'autre étant un élément en crochet de type mâle, **caractérisée en ce que**
- des premiers éléments (5) de même type sont formés en ligne sur un bord longitudinal (3, 4) du film de la gaine rétractable à intervalles définis au moyen de moulages plastiques (16) par injection délimités, réalisant une liaison de matière au moins d'un côté,
- des deuxièmes éléments (6) pouvant être raccordés aux premiers éléments (5) sont formés de manière correspondante sur le deuxième bord longitudinal du film à intervalles définis au moyen de moulages plastiques (16) par injection délimités, réalisant une liaison de matière au moins d'un côté, et
- le premier élément (5) présente une ouverture (9) et un épaulement inférieur (10) au niveau de l'ouverture (9), et le deuxième élément (6) un ergot d'enclenchement (11) faisant saillie du plan du deuxième élément (6), lequel est insérable depuis le bas par l'ouverture (9) du premier élément (5), l'épaulement inférieur (10) correspondant à la hauteur du deuxième élément (6), et **en ce que** les deux éléments (5, 6) sont en matière plastique et sont parties intégrantes du moulage plastique (16).

2. Gaine rétractable selon la revendication 1, **caractérisée en ce que** le film (2) est incorporé aux moulages plastiques (16) dans la zone de bordure.

3. Gaine rétractable selon la revendication 1, **caractérisée en ce que** les moulages plastiques (16) présentent des perforations (8) par des broches qui pénètrent dans ceux-ci pendant l'injection enrobant le film plastique (2) dans la cavité.

4. Procédé de fabrication d'une gaine rétractable selon la revendication 1, **caractérisé en ce que**
- lors d'une première étape de procédé, la gaine rétractable est coupée ou un film rétractable (2) est découpé en bandes,
- les bandes de bord de la gaine rétractable ou du film rétractable (2) sont introduites dans au moins une cavité d'un outil d'injection de matière plastique reproduisant la forme des éléments (5, 6) qui s'enclenchent l'un dans l'autre,
- des broches fixent la position du film rétractable dans l'outil d'injection de matière plastique,
- la cavité est remplie de matière plastique liquide de même type que celle de la gaine rétractable ou du film rétractable (2), ou de matière plastique d'un type liable avec celle-ci pour une liaison de matière avec le film, et
- conformément à des étapes de procédé identiques, d'autres éléments (5, 6) s'enclenchant l'un dans l'autre sont moulés en ligne par injection simultanément ou consécutivement, les éléments (5, 6) s'enclenchant l'un dans l'autre correspondants étant réalisés de manière à pouvoir être enclenchés l'un dans l'autre par pression, quand le film rétractable (2) est posé autour du câble ou du faisceau de câbles (1) ou de l'objet oblong.

5. Outil pour la fabrication d'une gaine rétractable selon la revendication 1, **caractérisé en ce que**
- ledit outil présente au moins deux cavités opposées, une première cavité servant à former les premiers éléments (5) et la cavité opposée servant à former le deuxième élément (6) correspondant,
- ledit outil présente des fentes d'insertion dans la région des deux cavités, par lesquelles des bandes de bord du film de la gaine rétractable peuvent être mises en place dans la cavité, et
- des broches de fixation faisant saillie depuis le bas et maintenant les bandes de bord sont prévues dans les cavités pour la fixation de position pendant l'injection.

6. Outil pour la fabrication d'une gaine rétractable selon la revendication 5, **caractérisé en ce que** plusieurs cavités sont prévues en ligne dans ledit outil.
